(19)

Europäisches
Patentamt
European
Patent Office
Office européen
des brevets

(11) **EP 2 330 755 A1**

(12) **EUROPEAN PATENT APPLICATION**

(43) Date of publication:
08.06.2011 Bulletin 2011/23

(51) Int Cl.:
*H04B 10/08* (2006.01)   *H04B 10/20* (2006.01)
*H04L 29/06* (2006.01)   *H04J 14/02* (2006.01)

(21) Application number: 09178188.0

(22) Date of filing: 07.12.2009

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Nokia Siemens Networks Oy
02610 Espoo (FI)**

(72) Inventor: **Treyer, Thomas
81379, München (DE)**

(54) **Method and device for data processing in an optical network**

(57)   A method and a device for data processing in an optical network are provided, wherein an optical network unit registers with at least two optical resources of the optical network.

# Fig.1

## Description

The invention relates to a method and to a device for data processing in an optical network.

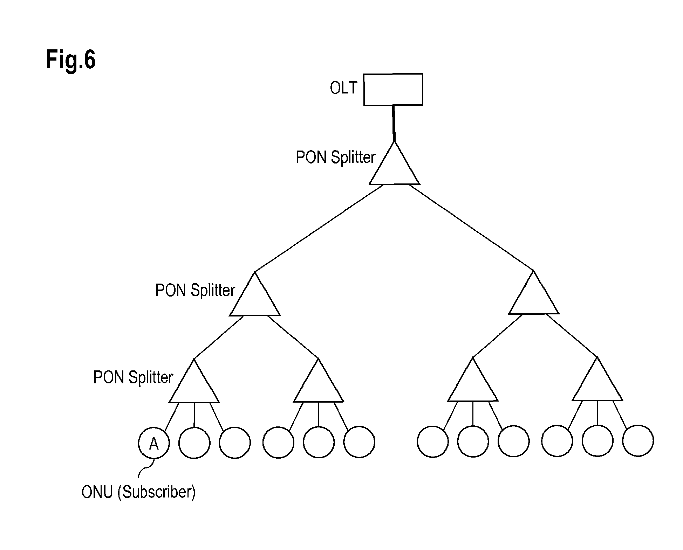

A passive optical network (PON) often utilizes optical access systems with optical fibers being arranged in a tree topology to connect an optical line terminal (OLT) to several optical network units (ONUs, also referred to as ONTs) via passive splitters (PON splitters), see **Fig.6.**

The advantage of such tree topology is that a large number of subscribers (ONUs) can be served by a single OLT (or a few OLTs). The OLT may be deployed in a central office.

The PON can be of various types. Multiplexing of subscribers in the PON can be conducted by time division multiplexing (TDM), code division multiplexing (CDM) or wavelength division multiplexing (WDM).

PON systems allows multiple OLTs to serve a single PON, thus the ONU may select to which OLT it connects. In particular, the PON system can be a NGOA, which allows a single ONU to select between different OLTs.

It is a disadvantage of the PON system that the OLT cannot determine the exact location of a specific subscriber within a PON tree. For example, with regard to Fig.6, a carrier operating the OLT cannot determine the geographical location of ONU (subscriber) A. Therefore, "trust by wire" cannot be employed and it is in particular not possible, e.g., to restrict a single subscriber to use a particular service only at a predefined location. Instead, the subscriber may move from one leaf of the PON tree to another leaf without the service provider being able to detect such change of location. Hence, attack scenarios are feasible where one malicious subscriber spoofs the OLT to be a different subscriber.

Another problem refers to failure handling: In case of a hardware failure, the operator may need to send a technician to the site where the failure occurred. As the failure cannot be located by the OLT, the technician may have to visit several sites that are associated with the leaves of the PON tree. In an exemplary use case, the technician may have to visit many homes before he will be able to pinpoint a single failure.

It is another disadvantage that the PON system is quite susceptible to malicious attacks sending an interfering light in upstream direction from one leaf of the PON tree towards the OLT. Depending on a power level, a modulation and a wavelength such interfering light may disturb the complete OLT upstream receiver. As a consequence, the traffic for all ONUs (subscribers) is jammed. This type of attack can be compared to a jamming transmitter in a radio cell of a GSM/UMTS network.

These disadvantages impose one main reason as to why some access providers are not willing to implement PON systems. Access providers may be willing to accept these disadvantages as existing PON systems only have a small splitting ratio and the number of subscribers in a single PON is relatively low, e.g., 32 or less subscribers. However, future PON systems like NGOA will lead to a significant increase of subscribers in a PON. Hence, the disadvantages discussed above become increasingly relevant.

The **problem** to be solved is to overcome the disadvantages discussed above and in particular to provide an efficient approach to utilize a PON system for a huge number of subscribers, wherein a subscriber and/or failure can be localized. This problem is solved according to the features of the independent claims. Further embodiments result from the depending claims.

In order to overcome this problem, a method for data processing in an optical network is provided, wherein an optical network unit registers with at least two optical resources of the optical network.

The optical network unit may in particular register subsequently with the at least two optical resources of the optical network. This way, the subsequent registration may be evaluated in view of the previous registration and access to the optical network may be granted based on predetermined conditions (e.g., correct optical resource addressed by the optical network unit; timely registration, etc.).

It is noted that the registration may comprise setting up, establishing and/or configuring a connection with or via the optical resource.

It is also noted that the optical network is or comprises at least one passive optical network.

This approach efficiently allows localizing the optical network unit (ONU), e.g., determining which leaf of a PON tree structure the actual ONU is associated with.

It is another advantage of this approach that resiliency is provided as, e.g., the ONU is connected to at least two OLTs. In case of a failure, the respective other connection can be used for conveying traffic to/ from the ONU.

For redundancy purposes, the at least two optical resources may be different physical entities, in particular deployed at different locations. This allows an efficient redundancy in case of a site failure.

It is noted that the ONU can be a decentralized component of an optical network. The ONU may be located at a leaf of a PON tree structure and it may terminate optical traffic and convert optical to electrical signals to be utilized, e.g., for internet access, television services, voice services or the like. The OLT may be a centralized optical processing unit of the PON.

In an embodiment, the optical resource comprises one of the following:

- a wavelength range;
- an central optical component of a PON;
- an optical line terminal.

Hence, optical resources mentioned could be of different types, in particular a central optical component (as is the OLT) or a physical or logical resource as is the wavelength range. The total wavelength range could be partitioned by an active filter (WDM splitter) towards different portions of the PON (in downstream direction towards the ONUs). This partitioning of wavelengths can supply disjoint subsets of wavelength ranges, which could be used as separate optical resources as described herein.

It is in particular noted that the solution suggested may be utilized with two optical resources and also with more than two optical resources. The types of resources could also be mixed in order to achieve a higher total number of optical resources. The higher the number of optical resources the better the resolution of the localization may be.

In another embodiment,

- the optical network unit registers with a first optical resource;
- the optical network unit registers with a second optical resource;
- the optical network unit obtains access to the optical network based on its registration with the first optical resource and the second optical resource.

This concept works accordingly with more than two optical resources: The ONU may than have to register with as many optical resources as required. Afterwards and in case of a successful registration (with all its resources or a predefined portion thereof), the ONU may be granted access to the optical network.

It is noted that the sequence of steps conducted during such registration with various optical resources allows, e.g., a centralized component, to decide whether the ONU requests legitimate access to the optical network. As the registration is to be conducted with at least two optical resources, the position of the ONU can be determined.

In a further embodiment, a registration attempt of the optical network unit with the first optical resource is conveyed to the second optical resource.

Hence, the second optical resource being, e.g., an OLT can utilize the knowledge of a(n) (un)successful registration of the ONU with another optical resource in order to decide whether or not the ONU shall be granted access to the optical network.

It is noted that this registration attempt may be conveyed to several other optical resources of the optical network.

In a next embodiment, the first optical resource supplies an encrypted information to the optical network unit that is used by the optical network element during registration with the second optical resource.

Hence, the encrypted information may be used as a key to prove to the second optical resource that the login with the first optical resource has been successful.

This concept applies accordingly for more than two optical resources to which the ONU has to register prior to getting access to the optical network.

It is also an embodiment that a time duration is monitored between registration attempts of the optical network unit.

It is noted that the registration attempt refers to a successful and/or to an unsuccessful registration.

For example, a time stamp can be used to determine a time interval that has lapsed between two registration attempts of the ONU. If the time interval exceeds a predefined threshold, the access to the network may not be granted.

Pursuant to another embodiment, a registration attempt of the optical network unit is stored at a data base that is accessible to the at least two optical resources or to a centralized component utilizing the at least two optical resources.

The registration (or registration attempt) of the ONU with each optical resource may be stored with such data base. In particular, a successful registration with the first optical resource can be verified by the second optical resource (or the component driving or managing the second optical resource) via database access.

According to an embodiment, a subscriber group is determined by optical network units that are connected to the same intermediate optical component.

It is possible to enforce a policy according to which a single ONU is only allowed to register with particular optical resources. Hence, subscriber groups can be determined based on the structure of the optical network, e.g., all ONUs sharing one intermediate optical component (e.g., a PON splitter to which the ONUs are connected) may be associated with one subscriber group. The optical component may be connected to at least two optical resources.

According to another embodiment, the intermediate optical component is a passive optical splitter or a filter of the optical network.

In yet another embodiment, the subscriber group is associated with at least two optical resources of the optical network.

According to a next embodiment, the optical network unit is only allowed registering with the optical resources of its subscriber group.

During a login procedure of an ONU, the OLT can check, which OLTs the ONU is allowed connecting to. Based on this knowledge, the physical location of the ONU can be determined.

Pursuant to yet an embodiment, the optical network unit registers with the at least two optical resources of the optical network after a disruption of a connection with one of the optical resources.

Hence, the ONU may re-register after a disruption occurred. This allows verifying that the location of the ONU did not change during such disruption.

It is an alternative that a physical failure within the PON may be handled without re-registration of the ONU; for example, an ONU that was already registered prior to the failure may be allowed access to the network. In this case, the previous location known by the optical network is assumed to persist.

It is also an option that a trusted ONU conveys its location towards an access provider.

Pursuant to a further embodiment, a location of the optical network unit is determined via a correlation of the at least two optical resources, wherein such correlation is in particular conducted by a centralized management component or by the optical network unit.

Such centralized management component may in particular comprise a correlator and a data base.

The problem stated above is also solved by a device comprising or being associated with a processing unit that is arranged such that the steps as described can be executed thereon.

According to an embodiment, the device is an optical network component, in particular a or associated with an ONU or an OLT.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

The problem is also solved by a communication system comprising at least one of the aforementioned devices.

Embodiments of the invention are shown and illustrated in the following figures:

Fig.1   shows a schematic of a PON, wherein three OLTs are connected to several ONUs (subscribers) via first level PON splitters and second level PON splitters;

Fig.2   shows a schematic of a PON, wherein an OLT is connected to a WDM filter supplying (disjoint) portions of the available wavelength band (or range) towards first level PON splitters and further towards second level PON splitters to which ONUs (subscribers) are connected;

Fig.3   shows a schematic of a PON, wherein two OLT are each connected to a WDM filter supplying (disjoint) portions of the available wavelength band towards first level PON splitters and further towards second level PON splitters to which ONUs (subscribers) are connected;

Fig.4   shows a schematic of a PON, wherein two OLT are each connected to a WDM filter supplying (disjoint) portions of the available wavelength band towards first level PON splitters and further towards second level PON splitters to which ONUs (subscribers) are connected, wherein all ONUs are connected to two different OLTs;

Fig.5   shows the PON of Fig.1 with a correlator and data base connected to each OLT;

Fig.6   shows a passive optical network comprising an OLT that is connected via several PON splitters to several ONUs.

The approach provided suggests that each ONU has physical connections with two or more optical resources, e.g., OLTs or wavelength ranges. The ONU can be a subscriber of a PON; the OLT may be a centralized optical processing unit of the PON. The PON may in particular be deployed in a tree topology.

The subscribers can be grouped such that every group is connected to a unique set of OLTs. Different groups cannot access the same OLTs. During a login procedure of an ONU, the OLT can check, which OLTs the ONU is allowed connecting to. Based on this knowledge, the physical location of the ONU can be determined.

The location of the ONU can be compared to a triangulation method, but instead of angles this approach may in particular utilize discrete values of fibers and wavelengths.

Regarding the connections between ONU and OLT, different approaches will be described hereinafter. The number of groups that can be distinguished from one another and thus the geographical resolution may in particular depend on a connectivity method chosen. Some connectivity methods may allow distinguishing more than 1000 subscriber groups. As a result, every single ONU may be located utilizing such connectivity method.

As every ONU has two different ways to connect to OLTs, the described method offers resiliency. Therefore the localization approach described provides an additional benefit of an increased redundancy.

A single jamming signal, which is produced by a malicious subscriber or by an ONU not functioning properly, cannot disturb the complete PON, but only a portion thereof. Every ONU that is not in the same group with the (malicious) jamming signal can use an alternate path to avoid the interference produced by the jamming signal. In addition, the jamming signal can be localized and counter-measures can be initiated.

Hereinafter, the following aspects will be described in more detail:

-   A login procedure for the ONU (also referred to as registration of the ONU): Providing a login, the ONU can prove that it (already) has connectivity to at least one OLT.

- A connectivity method: Various exemplary solutions are introduced.
- Localization of a jamming or disturbing signal.

Login procedure

The PON system and a multiplexing scheme allow the ONU to connect to one out of several OLTs. An example is a WDM PON system, where the OLTs offer different wavelengths and the ONU is arranged to tune to (one of) these different wavelengths.

a) The ONU connects to one of the OLTs. This connection may be based on a random selection of the OLT, a predefined configuration to select the OLT and/or other information to select the OLT during the connection phase.

b) The OLT registers the login attempt and may store it in a data base, which is accessible also to other OLTs. The OLT may reject the ONU's login attempt, in case the ONU tries to login at a single OLT only, because a single login does not allow localizing the ONU. The OLT may provide a directive to the ONU, which OLT it has to connect next. As an alternative, the ONU may try selecting another OLT by itself.

c) As indicated, the ONU may (also) connect to another OLT. After being connected, this OLT checks the data base of the OLTs and finds data of the previous login attempts of this particular ONU. Two logins at two different OLTs allows for the PON system to successfully localize the ONU and the OLT grants this ONU to access the network.

In addition or as an alternative, the following variants may apply:

1) Instead of providing a central data base for the OLTs, the first OLT may send an encrypted data set (key) to the ONU during its first login attempt. The ONU may use this key to prove to the second OLT that the first login attempt already occurred with another (i.e., the first) OLT.

2) A time stamp can be used to guarantee that only a short time interval has lapsed between consecutive login attempts. This avoids that the ONU physically moves from one geographical location to another between login attempts.

3) Both variants 1) and 2) can be combined; in this case, the time stamp can be encrypted in the key by the first OLT and decrypted by the 2nd OLT.

4) The approach may be applicable for more than two OLTs.
Every ONU may be connected to two or more OLTs. In case the ONU is connected to more than two OLTs, the ONU may have to login at those several OLTs before access to the network is granted.

5) As long as the connection between the ONU and the OLT is valid, the localization may be possible. If the connection is disrupted, the ONU may be forced by the access network to repeat the login procedure or a portion thereof. This way it can be verified that the ONU has not moved during the disruption.

6) If there is a physical failure in the PON and/or in one of the OLTs, the ONU cannot successfully complete the login procedure. In such scenario, the access network may grant access only to a well-known ONU, which has already logged in earlier and for which the last location is known by the network.

7) If an access provider trusts a particular ONU, a central data base or encrypted keys may not be required. The ONU executes the login procedure and may inform the OLT about its location.

Connectivity method: Interleaved Tree

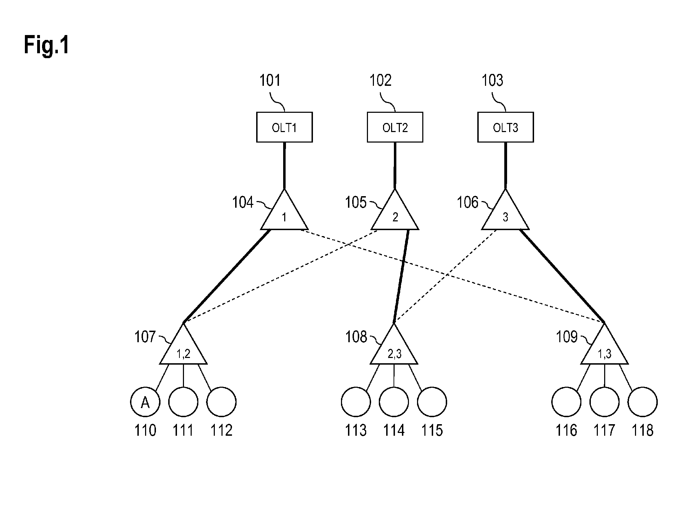

**Fig.1** shows a schematic of a PON, wherein three OLTs 101 to 103 are connected to several ONUs 110 to 118 (subscribers) via first level PON splitters 104 to 106 and second level PON splitters 107 to 109.
The subscriber groups are defined by the second level PON splitters 107 to 109. Each subscriber group is connected to 2 out of 3 OLTs.
In Fig.1, ONU A 110 is part of the subscriber group with geographical coordinates (1,2) indicating that they are connected to the OLT1 101 and the OLT2 102; each ONU 110 to 112 of this subscriber group is connected to OLT1 101 and to OLT2 102.
Accordingly, the ONUs 113 to 115 are part of a subscriber group with geographical coordinates (2,3) and ONUs 116 to 118 are part of a subscriber group with geographical coordinates (1,3).
The number of subscriber groups that are distinguishable from one another depends on the number of OLTs available. Hereinafter,

N denotes the number of OLTs,
M denotes the number of subscriber groups, and
m denotes a number of subscriber groups that can be distinguished.

In a 2 out of N scenario, every subscriber group is connected to 2 OLTs. A number of distinguishable subscriber groups can be determined as follows:

$$m = \frac{N \cdot (N - 1)}{2}.$$

In a 3 out of N scenario, every subscriber group is connected to 3 OLTs. The number of distinguishable subscriber groups can be determined as follows:

$$m = \frac{N \cdot (N - 1) \cdot (N - 2)}{3 \cdot 2}.$$

According to an example of a 2 out of N scenario, 6 OLTs, 480 subscribers (ONUs), 15 second level PON splitters and 6 first level PON splitters may be provided. Each OLT may have 80 ports in case of no resiliency is provided and 100 ports in case of resiliency.

Hence, the PON in this example has 480 subscribers, which are too many to be handled by the access provider without any localization services. By distributing the load via 6 OLTs, every OLT has to handle 80 subscribers in the normal case. To handle localization, no hardware overhead is required either in the OLT or in the ONU. If resiliency is also required, the OLT ports supply a capacity of 100 subscribers instead of 80 subscribers. This results in a small overhead of 25% for resiliency purposes.

In a roll-out example, the OLTs may be deployed with a central office (CO). This CO may serve thousands of subscribers: Interleaving 6 OLT ports is not an issue as the CO supplies much more than 6 ports. In the same roll-out example the first level PON splitters may be deployed with a local office (LO). Hence, the solution provided does not require increasing the number of fibers between the CO and the LO. In this roll-out example the second level PON splitters can be located in multi-dwelling units. The cable management between the LO and the multi-dwelling unit is typically based upon cables with 8 to 64 fibers. Therefore, doubling of fibers between the LO and the multi-dwelling units can be provided at moderate costs. Even with existing PONs the additional fibers required are usually available.

Connectivity method: Multiple Coloring

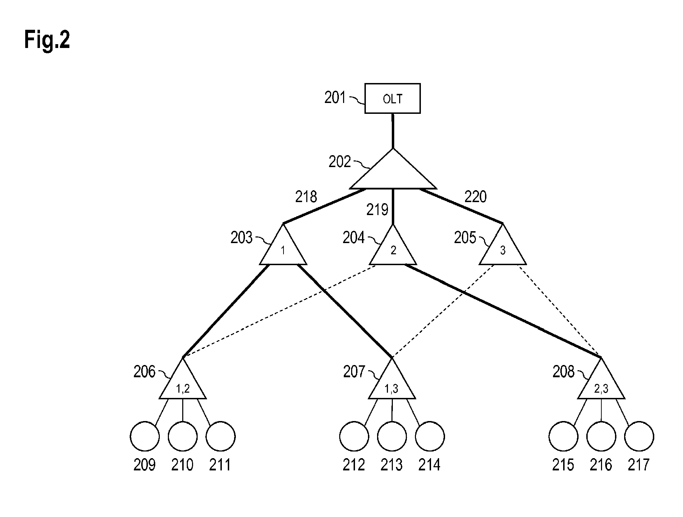

This connectivity method is similar to the one explained above. **Fig.2** shows a schematic of a PON, wherein an OLT 201 is connected to a WDM filter 202 supplying (disjoint) portions 218 to 220 of the available wavelength band (or range) towards first level PON splitters 203 to 205 and further towards second level PON splitters 206 to 208 to which ONUs (subscribers) 209 to 217 are connected.

Instead of different OLTs, different wavelength ranges 218 to 220 of one OLT 201 are used. A subscriber 209 to 217 can be localized by the capability of its ONU to register with two different wavelength ranges.

Connectivity method: Interleaved Tree and Multiple Coloring

This connectivity method combines both connectivity methods illustrated above.

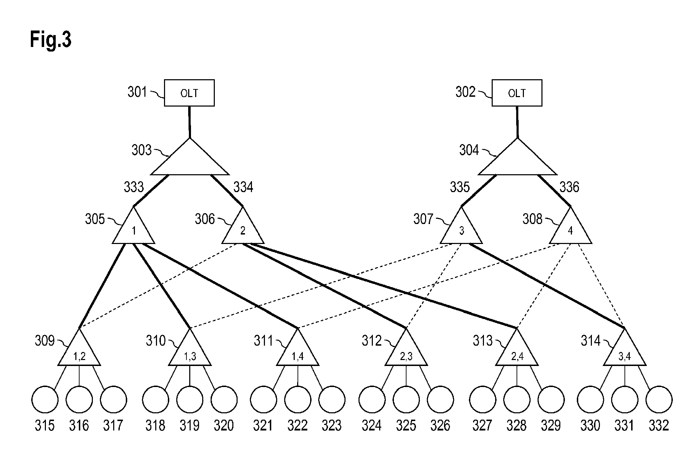

**Fig.3** shows a schematic of a PON, wherein an OLT 301 is connected to a WDM filter 303 supplying (disjoint) portions 333, 334 of the available wavelength band towards first level PON splitters 305, 306 and further towards second level PON splitters 309 to 313 to which ONUs (subscribers) 315 to 329 are connected. Accordingly, an OLT 302 is connected to a WDM filter 304 supplying (disjoint) portions 335, 336 of the available wavelength band towards first level PON splitters 307, 308 and further towards second level PON splitters 310 to 314 to which ONUs (subscribers) 318 to 332 are connected.

Every OLT port is split by the WDM filter 303, 304 into several wavelength ranges 333, 334, 335, 336. This increases the number of possibilities of a single subscriber group to be connected to an OLT. As a result, a significant number of additional subscriber groups can be distinguished. Hereinafter,

R denotes a number of wavelength ranges.

In a 2 out of N type scenario, the number m of subscriber groups that can be distinguished amounts to

$$m = \frac{N \cdot R \cdot (N \cdot R - 1)}{2}.$$

Hence, every subscriber group is connected to 2 OLTs via R wavelength ranges. With N=4 OLTs and R=16 wavelength ranges, m amounts to 2016. Pursuant to this high number of m it is likely to identify a leaf of the PON tree and therefore localize a subscriber (ONU).

It is noted that the scenario shown in Fig.3 does not provide full redundancy for ONU 315, as it is connected to the OLT 301 only. The same applies to all subscribers 316 and 317 that are connected to the second level PON splitter 309. Accordingly, all subscribers 330 to 332 that are connected to the second level PON splitter 314 are only connected to the OLT 302. In case full resiliency is required, the connectivity can be adapted accordingly.

Connectivity method: Interleaved Tree, Multiple Coloring and Redundancy

In this exemplary scenario, the ONUs are connected to two different OLTs.

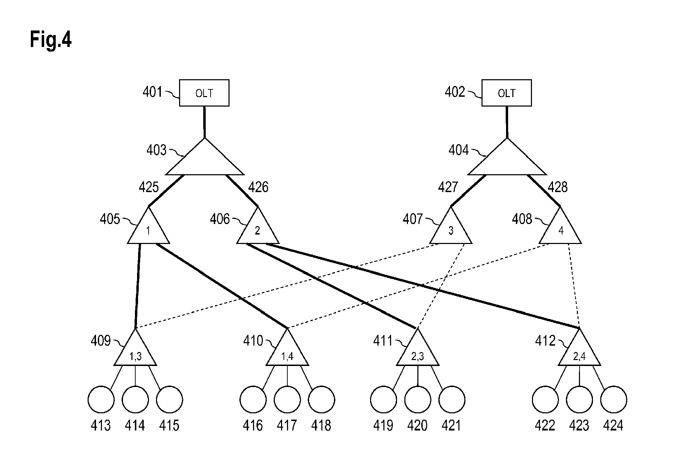

**Fig.4** shows a schematic of a PON, wherein an OLT 401 is connected to a WDM filter 403 supplying (disjoint) portions 425, 426 of the available wavelength band towards first level PON splitters 405, 406 and further towards second level PON splitters 409, 410 to which ONUs (subscribers) 413 to 424 are connected. Accordingly, an OLT 402 is connected to a WDM filter 404 supplying (disjoint) portions 427, 428 of the available wavelength band towards first level PON splitters 407, 408 and further towards second level PON splitters 411, 412 to which ONUs (subscribers) 413 to 424 are connected.

In a 2 out of N type scenario, the number m of subscriber groups that can be distinguished amounts to

$$m = \frac{N \cdot R \cdot (N-1) \cdot R}{2}.$$

Hence, every subscriber group is connected to 2 OLTs via R wavelength ranges. With N=4 OLTs and R=16 wavelength ranges, m amounts to 1536. Pursuant to this high number of m it may be possible to identify a leaf of the PON tree.

Localization of jamming signals

Jamming signals can be originated by malicious attacks or by faulty equipment (e.g., ONUs or other devices that are connected to the optical network by mistake). In all these cases, the access provider needs to determine the geographical location of the origination of the jamming signal.

The approach presented herein allows localizing such jamming or disturbing signal in case two (or more) OLTs are identified to which the jamming signal is "visible".

Such visibility of the jamming signal may be related to its traffic disturbing potential. A jamming signal may disturb one channel only or it jumps or drifts from one channel to another. It may even disturb all channels simultaneously.

The jamming signal is thus localized via a correlation between multiple OLTs. Such correlation can be provided, e.g., by a centralized management system.

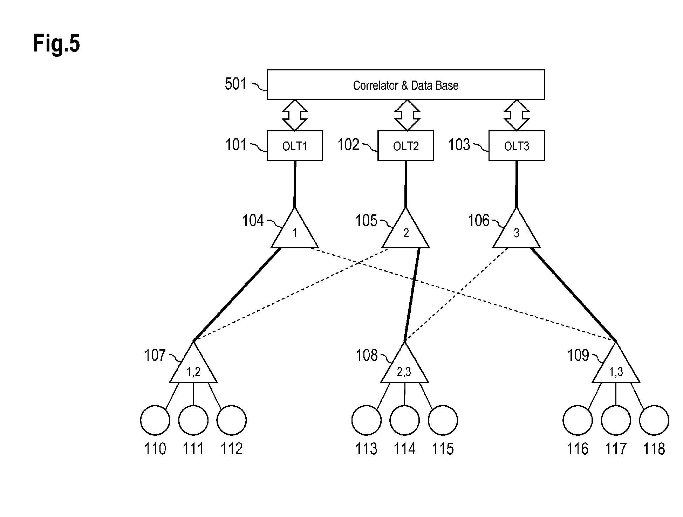

**Fig.5** shows the PON of Fig.1 with a correlator and data base 501 (also referred to as "correlator") connected to each OLT 101 to 103.

The correlator 501 can be used for localizing the jamming signal and for localizing ONUs as described above.

The following cases may apply:

Case A: OLT directly detects the jamming signal:

An upstream receiver detects a signal level, but is not able to lock on to the signal, because of, e.g., unknown modulation or coding schemes.

In this case, the signal is regarded as jamming signal. If the signal correlates with a signal from another OLT, the location of the jamming signal can be determined.

Case B: A single ONU has transmit problems

The upstream receiver detects a signal and can demodulate it, but the bit error rate is high or the traffic is disrupted from time to time. Hence, the ONU may switch to another channel. The first channel, which has shown problems, is marked as "problematic". If another ONUs reports the same problems for this "problematic" channel, a (long-term) correlation of this channel can be conducted with other OLTs. If the same channel is marked as "problematic" by another OLT, the jamming source can be localized.

Case C:

Multiple ONUs disconnect from the OLT over a certain time interval and then again register with this OLT.

During the login procedure, the ONUs report transmission problems as being the reason for the previous disconnections. The OLT may thus assume a drifting or jumping jamming signal as reason for the disconnections. A correlation with another OLT may help localizing the jamming signal.

Case D:

A complete OLT port looses connection to all ONUs; some of the ONUs may re-appear at other OLT ports reporting problems at the previous OLT port. A jamming signal is assumed to be the reason for the port loss and the correlation with another OLT that experiences the same issue, may allow localizing the jamming source.

**List of Abbreviations:**

| | |
|---|---|
| CDM | Code Division Multiplexing |
| CO | Central Office |
| LO | Local Office |
| NGOA | Next Generation Optical Access |
| OLT | Optical Line Terminal |
| ONT | Optical Network Terminal |
| ONU | Optical Network Unit |

PON      Passive Optical Network

TDM      Time Division Multiplexing

WDM      Wavelength Division Multiplexing

**Claims**

1. A method for data processing in an optical network,

    - wherein an optical network unit registers with at least two optical resources of the optical network.

2. The method according to claim 1, wherein the optical resource comprises one of the following:

    - a wavelength range;
    - an central optical component of a PON;
    - an optical line terminal.

3. The method according to any of the preceding claims,

    - wherein the optical network unit registers with a first optical resource;
    - wherein the optical network unit registers with a second optical resource;
    - wherein the optical network unit obtains access to the optical network based on its registration with the first optical resource and the second optical resource.

4. The method according to claim 3, wherein a registration attempt of the optical network unit at the first optical resource is conveyed to the second optical resource.

5. The method according to any of claims 3 or 4, wherein the first optical resource supplies an encrypted information to the optical network unit that is used by the optical network element during registration with the second optical resource.

6. The method according to any of claims 3 to 5, wherein a time duration is monitored between the registration attempts of the optical network unit.

7. The method according to any of the preceding claims, wherein a registration attempt of the optical network unit is stored at a data base that is accessible to the at least one optical resource.

8. The method according to any of the preceding claims, wherein a subscriber group is determined by optical network units that are connected to the same intermediate optical component.

9. The method according to claim 8, wherein the intermediate optical component is a passive optical splitter or a filter of the optical network.

10. The method according to any of claims 8 or 9, wherein the subscriber group is associated with at least two optical resources of the optical network.

11. The method according to claim 10, wherein the optical network unit is only allowed registering with the optical resources of its subscriber group.

12. The method according to any of the preceding claims, wherein the optical network unit registers with the at least two optical resources of the optical network after a disruption of a connection with one of the optical resources.

13. The method according to any of the preceding claims, wherein a location of the optical network unit is determined via a correlation of the at least two optical resources, wherein such correlation is in particular conducted by a centralized management component or by the optical network unit.

14. A device comprising a processing unit that is arranged such that the method according to any of the preceding claims is executable thereon.

15. The device according to claim 14, wherein said device is an optical network component, in particular a or being associated with an optical network unit or a centralized component of the optical network.

# Fig.1

**Fig.2**

**Fig.3**

**Fig.4**

**Fig.5**

# Fig.6

OLT

PON Splitter

PON Splitter

PON Splitter

A

ONU (Subscriber)

Europäisches
Patentamt

European
Patent Office

Office européen
des brevets

**EUROPEAN SEARCH REPORT**

Application Number

EP 09 17 8188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/062256 A1 (TAKEUCHI TAKASHI [JP] ET AL) 1 April 2004 (2004-04-01) * paragraphs [0010], [0045], [0048], [0051]; figures 8,22 * | 1-15 | INV. H04B10/08 H04B10/20 H04L29/06 H04J14/02 |
| A | US 2006/129814 A1 (EUN JEE S [KR] ET AL) 15 June 2006 (2006-06-15) * paragraphs [0014], [0028], [0052] - [0053]; figures 1,2a * | 1-15 | |
| X | WO 2009/052676 A1 (ZTE CORP [CN]; LU JINSHU [CN]; LI QING [CN]; XIE YUNPENG [CN]; MA HUAN) 30 April 2009 (2009-04-30) * abstract * | 1,14,15 | |
| X | US 2008/232819 A1 (MUKAI HIROAKI [JP]) 25 September 2008 (2008-09-25) * paragraph [0060] - paragraph [0075]; figure 8 * | 1-15 | |
| X | US 2002/184644 A1 (LUND ROBERT M [US] ET AL) 5 December 2002 (2002-12-05) * paragraphs [0017], [0018]; figures 1,2 * | 13 | TECHNICAL FIELDS SEARCHED (IPC) H04B H04L H04J |
| E | EP 2 180 622 A1 (NOKIA SIEMENS NETWORKS OY [FI]) 28 April 2010 (2010-04-28) * paragraph [0013]; figure 1 * | 1-15 | |
| A | JP 2004 104182 A (NIPPON TELEGRAPH & TELEPHONE) 2 April 2004 (2004-04-02) * abstract * | 1-15 | |
| A | CN 1 866 860 A (HUAWEI TECH CO LTD [CN]) 22 November 2006 (2006-11-22) * abstract * | 1-15 | |

The present search report has been drawn up for all claims

| Place of search | Date of completion of the search | Examiner |
|---|---|---|
| Munich | 19 May 2010 | De Vries, Jane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 8188

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2010

| Patent document cited in search report | | Publication date | Patent family member(s) | | Publication date |
|---|---|---|---|---|---|
| US 2004062256 | A1 | 01-04-2004 | JP<br>JP<br>US | 4110890 B2<br>2004096579 A<br>2008285972 A1 | 02-07-2008<br>25-03-2004<br>20-11-2008 |
| US 2006129814 | A1 | 15-06-2006 | KR | 20060065863 A | 14-06-2006 |
| WO 2009052676 | A1 | 30-04-2009 | CN | 101145903 A | 19-03-2008 |
| US 2008232819 | A1 | 25-09-2008 | WO<br>JP | 2005046138 A1<br>4368853 B2 | 19-05-2005<br>18-11-2009 |
| US 2002184644 | A1 | 05-12-2002 | US | 2005152506 A1 | 14-07-2005 |
| EP 2180622 | A1 | 28-04-2010 | NONE | | |
| JP 2004104182 | A | 02-04-2004 | NONE | | |
| CN 1866860 | A | 22-11-2006 | NONE | | |

EPO FORM P0459